# EUROPÄISCHE PATENTSCHRIFT

(11) **EP 1 523 631 B1**
(45) Veröffentlichungstag und Bekanntmachung des Hinweises auf die Patenterteilung: **09.08.2006**
(21) Anmeldenummer: 03764895.3
(22) Anmeldetag: 15.07.2003
(51) Int. Cl.: F16H 61/00

(54) **KEGELSCHEIBENUMSCHLINGUNGSGETRIEBE**
CONICAL DISK TYPE FLEXIBLE DRIVE MECHANISM
TRANSMISSION A VARIATION CONTINUE A POULIES CONIQUES

(30) Priorität: 15.07.2002 DE 10231790
(43) Veröffentlichungstag der Anmeldung: 20.04.2005
(73) Patentinhaber: LuK Lamellen und Kupplungsbau Beteiligungs KG, 77815 Bühl (DE)
(72) Erfinder: FAUST, Hartmut, 77815 Bühl (DE); MÜLLER, Eric, 67657 Kaiserslauten (DE); SCHEUFELE, Klaus, F-67480 Fort Louis (FR); GRUCA, Werner, 77866 Memprechtshofen (DE)
(86) Internationale Anmeldenummer: PCT/DE2003/002373
(87) Internationale Veröffentlichungsnummer: WO 2004/010029

(56) Entgegenhaltungen:
- DE-A- 10 025 880
- DE-A- 10 160 865
- DE-A- 19 857 710

## Beschreibung

Die Erfindung betrifft ein Kegelscheibenumschlingungsgetriebe mit einem antriebseitigen und einem abtriebseitigen Kegelscheibenpaar gemäß dem Oberbegriff des Anspruchs 1. Ein solches Kegelscheibenumschlingungsgetriebe ist aus der DE 100 25880A bekannt.

Kegelscheibenumschlingungsgetriebe finden in jüngerer Zeit zunehmend Verwendung in Personenkraftwagen. Sie ermöglichen nicht nur eine Steigerung des Komforts, sondern auch eine Verbrauchsminderung. Um das Einsatzspektrum von Kegelscheibenumschlingungsgetrieben zu erweitern, werden in neuerer Zeit intensive Entwicklungsanstrengungen hinsichtlich deren Drehmomentübertragungsvermögen gemacht.

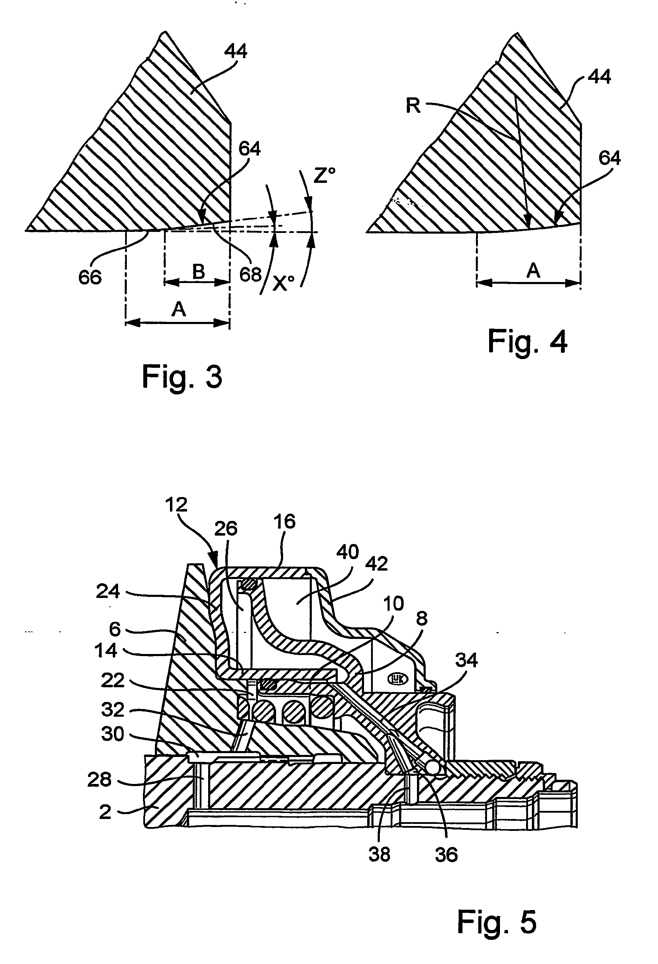

Fig. 5 zeigt die obere Hälfte eines Halbschnittes durch ein an sich bekanntes Kegelscheibenumschlingungsgetriebe. Eine Welle 2 eines Kegelscheibenpaars eines Kegelscheibenumschlingungsgetriebes, die eine Achse A-A hat, ist bevorzugt einteilig mit einer nicht dargestellten Festscheibe ausgebildet. Im Abstand von der Festscheibe ist auf der Welle 2 drehfest und axial verschiebbar eine als Wegscheibe 6 bezeichnete Kegelscheibe angeordnet. Im Abstand von der Rückseite der Wegscheibe 6 ist mit der Welle 2 starr ein Stützring 8 verbunden, von dem in einem radial mittleren Bereich eine axial gerichtete, zylindrische Ringwand 10 in Richtung auf die Kegelscheibe 6 vorsteht. Am radial äußeren Bereich der Rückseite der Wegscheibe 6 liegt ein ringtopfartiges Wandteil 12 an oder ist daran befestigt, das radial innen und außen axial verlaufende, zylindrische Ringwände 14 und 16 aufweist. Die innere Ringwand 14 ist in abgedichteter Gleitberührung mit der Ringwand 10 und die äußere Ringwand 16 ist in abgedichteter Gleitberührung mit dem Außenumfang des Stützrings 18. Auf diese Weise ist zwischen der Welle 2 und der Kegelscheibe sowie den Ringwänden 10 und 14 eine innere Druckkammer 22 gebildet und zwischen den Ringwänden 10, 14 und 16 sowie dem Boden 24 des Wandteils 12 und dem Stützring 8 eine äußere Druckkammer 26 gebildet.

Die Druckmittelversorgung der inneren Druckkammer 22 erfolgt über einen axialen, in der Welle 2 ausgebildeten Durchlass, der über einen radialen Durchlass 28 der Welle 2 in einen Raum 30 mündet, der zwischen der Welle 2 und der Wegscheibe 6 ausgebildet ist und über einen in der Wegscheibe 6 ausgebildeten Durchlass 32 mit der Druckkammer 22 verbunden ist. Die axiale Länge des Raums 30 ist derart, dass über den gesamten Verstellweg der Wegscheibe 6 eine Druckmittelverbindung zwischen dem Durchlass 28 und dem Durchlass 32 besteht. Vorteilhaft grenzt der Raum 30 unmittelbar an eine im einzelnen nicht dargestellte Keilverzahnung, über die die drehfeste und axial verschiebbare Verbindung zwischen der Wegscheibe 6 und der Welle 2 erfolgt.

Die äußere Druckkammer 26 wird über einen in dem Stützring 8 ausgebildeten Kanal 34, einen Ringkanal 36 und einen in der Welle 2 ausgebildeten radialen Durchlass 38 mit einem axialen Durchlass der Welle 2 verbunden, der von dem axialen Durchlass, der mit dem Durchlass 28 verbunden ist, getrennt ist.

Die beiden Druckkammern 22 und 26 können auf diese Weise unabhängig voneinander mit Druckmittel beaufschlagt werden, so dass die Wegscheibe 6 in Richtung auf die nicht dargestellte Festscheibe verschoben werden kann.

Zwischen der Ringwand 16, einer die Ringwand 16 verlängernden Haube 42 und der Rückseite des Stützrings 8 ist eine Fliehölkammer 40 ausgebildet, die in an sich bekannter Weise dazu dient, Drehzahleinflüsse auf die in den Kammem 22 und 26 wirkenden Drucke auszugleichen.

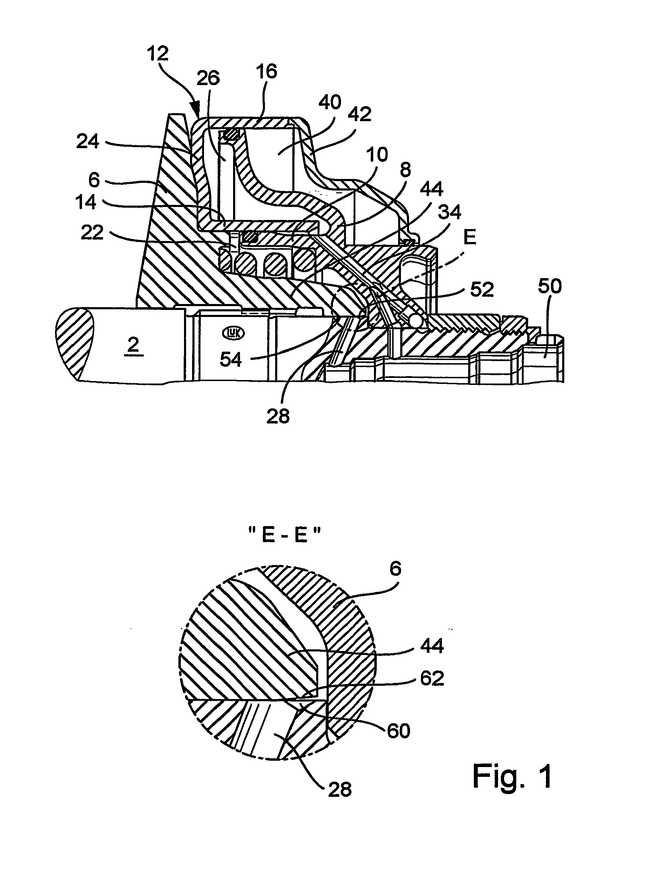

Ein Problem bezüglich der Druckmittelversorgung der inneren Druckkammer 22 besteht darin, dass der als Querbohrung ausgebildete Durchlass 32 der Wegscheibe 5 bzw. der Raum 30 gemäß Fig. 1 nach links zur nicht dargestellten Festscheibe hin lediglich durch einen einzigen Dichtspalt abgedichtet ist, der zwischen dem Außenumfang der Welle 2 und dem Innenumfang der Kegelscheibe 6 ausgebildet ist. Dies bedeutet in der Praxis verhältnismäßig hohe Leckageverluste, insbesondere wenn der Druck in der Druckkammer 22 hoch ist.

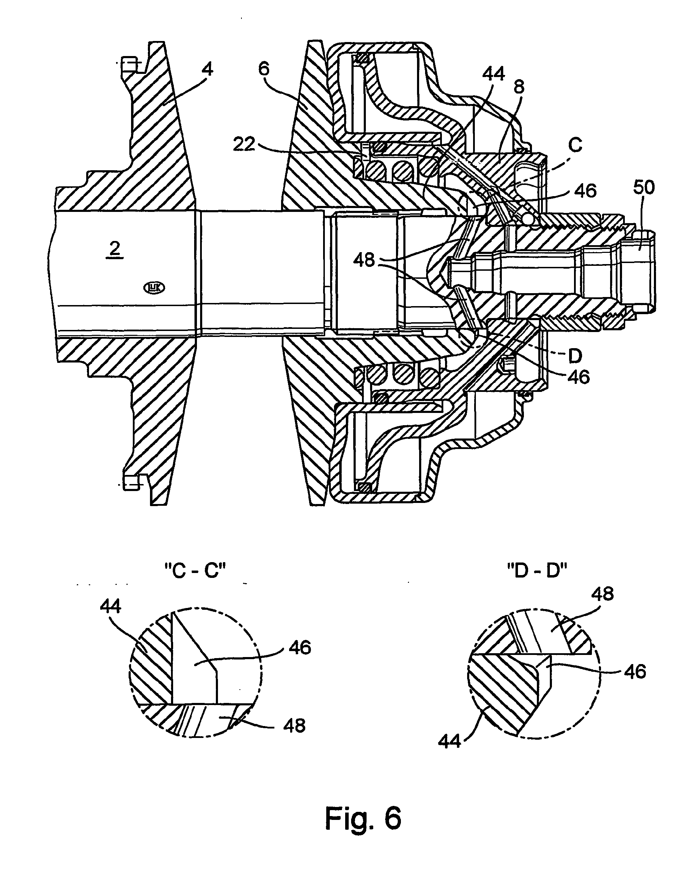

Um dem abzuhelfen, wurde die Konstruktion etwas modifiziert. Fig. 6 zeigt einen Axialschnitt durch ein Kegelscheibenpaar eines modifizierten Kegelscheibenumschlingungsgetriebes, wobei in Fig. 6 zusätzlich die bevorzugt einteilig mit der Welle 2 ausgebildete Festscheibe 4 dargestellt ist. Der Übersichtlichkeit halber sind in Fig. 6 nur die im Hinblick auf die erläuterte Modifikation wesentlichen Bereiche mit Bezugszeichen belegt.

Im Unterschied zu Fig. 5 wird bei der Ausführungsform gemäß Fig. 6 die radial innere Druckkammer 22 nicht über einen im Ansatzbereiches eines Halses 44 der Wegscheibe 6 in der Wegscheibe 6 ausgebildeten radialen Durchlass 32 versorgt, sondern der dem Stützring 8 zugewandte Endbereich des Halses 44 der Festscheibe 6 ist mit einer insgesamt radial verlaufenden Nut 46 versehen, wobei die geometrische Zuordnung derart ist, dass bei gemäß Fig. 1 voll nach rechts verschobener Wegscheibe 6 die Nut 46 einen, insgesamt radial verlaufende Durchlass 46 der Welle 2 überlappt, so dass ständig eine Druckmittelverbindung zwischen einem axialen Durchlass 50 der Welle und der Druckkammer 22 besteht.

Der Ausschnitt C der Fig. 6 zeigt eine Ausführungsform, bei der die Nut 46 in der Stirnseite des Halses 44 als einfache gerade Nut ausgebildet ist, die bereits im Halbzeug der Kegelscheibe 6 eingeschmiedet oder gefräst sein kann.

Im unteren Bildteil D ist eine abgewandelte Ausführungsform der Nut 46 dargestellt, bei der die Nut als Ecknut ausgebildet ist, deren Tiefe nur radial innen direkt am Durchmesser der Wegscheibe bzw. des Halses der Wegscheibe groß ist, um den Strörnungsmitteldurchgang sicherzustellen und die, nach außen hin mit verringerter Tiefe ausgebildet ist. Damit werden die Beanspruchungen des Materials herabgesetzt.

Bei den Ausführungsformen gemäß Fig. 6 treten gegenüber der Ausführungsform gemäß Fig. 5 geringere Leckspaltverluste zu dem Zwischenraum zwischen den beiden Kegelscheiben 4 und 6 hin auf, da, wie unmittelbar ersichtlich, die von der Strömung zu durchdringende axiale Spaltlänge größer ist.

Bei höheren mechanischen Belastungen der Wegscheibe 6, wie sie bei übertragbaren Drehmomenten von beispielsweise über 350 Nm auftreten, arbeiten die geschilderten Ausführungsformen aufgrund von Leckverlusten und mechanischen Verformungen und Beanspruchungen nicht mehr zufriedenstellend.

Der Erfindung liegt die Aufgabe zugrunde, ein Kegelscheibenumschlingungsgetriebe mit einem antriebseitigen und einem abtriebseitigen Kegelscheibenpaar gemäß dem Oberbegriff des Anspruchs 1 derart weiterzuentwickeln, dass die unmittelbar an die Welle angrenzende Druckkammer auch bei sehr hohen, von der Festscheibe übertragenen Drehmomenten, einwandfrei arbeitet, sowie die Ölzufuhr von der Welle in die Druckzylinder der Kegelscheibenpaare bei gleichzeitiger Verringerung der Bauteilbeanspruchung, insbesondere bei sehr tiefen Temperaturen, zu gewährleisten.

Diese Aufgabe wird bei einem Kegelscheibenumschlingungsgetriebe mit einem antriebseitigen und einem abtriebseitigen Kegelscheibenpaar, bei dem jeweils ein Kegelscheibenpaar auf einer Welle angeordnet ist, eine ein- oder mehrteilige mit der Welle ausgebildete Festscheibe besitzt, und eine Wegscheibe mit der Welle drehfest und axial verschiebbar verbunden ist, außerdem einen an der Welle axial unverschiebbar befestigten Stützring mit Abstand von einer Rückseite der Wegscheibe aufweist, wenigstens eine axial zwischen dem Stützring und der Rückseite der Wegscheibe ausgebildete Druckkammer besitzt, die über einen in einer Umfangsfläche der Welle mündenden, in der Welle ausgebildeten Durchlass mit Hydraulikmittel versorgt wird, dessen Druck zur Verschiebung der Wegscheibe veränderbar ist dadurch gelöst, dass ein Endbereich einer an der Welle geführten Innenfläche der Wegscheibe bei deren maximaler Entfernung von der Festscheibe die Mündung des Durchlasses überfährt und die Hydraulikmittelverbindung zwischen dem Durchlass und der Druckkammer im wesentlichen über Leckspalte zwischen der Innenfläche der Wegscheibe und der Außenfläche der Welle erfolgt.

Vorteilhaft ist, die Wegscheibe zu dem Stützring hin mit einem in dem Endbereich endenden Hals auszubilden. Damit wird eine große Stützlänge erzielt, über die sich die Wegscheibe an der Welle abstützt, so dass Kippmomente aufgenommen werden können, die auf die Wegscheibe in Folge der von einem Umschlingungsmittel des Kegelscheibenumschlingungsgetriebes hier wirkenden Kräfte aufgebracht werden.

Vorteilhaft verformt sich der Endbereich in Folge eines von der Kegelscheibe her wirkenden Kippmomentes oval. Durch diese Ovalverformung wird der Ausbildung von Leckagespalten begünstigt, über die die Druckmittelversorgung erfolgt.

Bevorzugt ist die dem Stützring zugewandte Seite der Mündung des Durchlasses oder die gesamte Mündung angesenkt.

Bei einer vorteilhaften Ausführungsform des Kegelscheibenpaares ist das der Außenfläche der Welle und dem Stützring zugewandte Ende der Wegscheibe mit einer Fase versehen.

Die Neigung der Fase beträgt vorteilhaft zwischen 2° und 10°.

Die Neigung der Fase nimmt vorteilhaft nach außen hin, d. h. zum Stützring hin, zu.

Die Länge beträgt vorteilhaft zwischen 0,5 und 5 mm.

In einer weiteren vorteilhaften Ausführungsform ist die Fase als Rundung ausgeführt, die tangential oder mit einem Knick in eine zylindrische Innenfläche der Wegscheibe übergeht.

Eine weitere vorteilhafte Ausgestaltung der Erfindung sieht vor, dass die Wellevorzugsweise in unmittelbarer Nähe ihrer Verjüngung zum Sitz des Stützringes hin mindestens eine radiale mit einer Ansenkung in Form einer Fase oder Rundung versehende Durchgangsbohrung aufweist und dass gleichzeitig der Stützring an der Stelle, wo die Kegelscheibe an diesen anschlägt, mit einer umlaufenden Nut versehen ist.. Altemativ kann diese Nut auch an einem abgesetzten angebracht werden. Dadurch tritt eine Entschärfung derfestigkeitsseitig kritischen Stelle ein. Außerdem entfällt die aufwendige und teure Nachbearbeitung der Kegelscheibe.

Von Vorteilhaft ist außerdem, dass am Halsende der Kegelscheibeeine umlaufende Ausnehmung, vorzugsweise in Form einer Fase oder Wölbung, vorhanden ist. Die Montierbarkeit wird dadurch deutlich einfacher, da die Zuordnung von Wellenbohrung und Ölnut der Kegelscheibe entfällt. Diese umlaufende Ausnehmung im Dichtungsträger kann bereits bei der Rohteilherstellung vorgesehen werden, was zu einer erheblichen Kosteneinsparung führt.

Die Erfindung wird im Folgenden anhand schematischer Zeichnungen beispielsweise und mit weiteren Einzelheiten erläutert:

Es steilen dar:
- Fig. 1: einen axialen oberen Halbschnitt eines Kegelscheibenpaares eines Kegelscheibenumschlingungsgetriebes,
- Fig. 2: ein vergrößertes Detail der Fig. 1,
- Fig. 3: eine Ausführungsform eines Details der Fig. 1,
- Fig. 4: eine abgeänderte Ausführungsform eines Details der Fig. 1,
- Fig. 5: einen bereits erläuterten axialen Halbschnitt eines Teils eines bekannten Kegelscheibenumschlingungsgetriebes und
- Fig. 6: einen Axialschnitt eines Kegelscheibenpaares mit gegenüber der Fig. 5 abgeänderter Ausführung.
- Fig 7: eine weitere Ausgestaltundsform eines Kegelscheibenpaares
- oberhalb der Symmetrieachse in eingerückter Stellung und
- unterhalb der Symmetrieachse in ausgerückter Stellung dargestellt.
- Fig. 8: Ansicht X der Fig. 7 mit entsprechend ausgebildeter Mündung des Durchlasses.
- Fig. 9: Ansicht X der Fig. 7mit abgesetztem Stützring.

In Fig. 1 sind dieselben Bezugszeichen wie in Fig. 5 verwendet, so dass die bereits erläuterten Umfänge nicht nochmals erläutert werden.

Im Unterschied zur Ausführungsform gemäß Fig. 5 ist der insgesamt radiale Durchlass 28 der Welle 2, der einen axialen Durchlass 52 der Welle 2 mit der radial inneren Druckkammer 22 verbindet, derart angeordnet, dass die Mündung 52 des insgesamt radialen Durchlasses 28 von dem Endbereich des Halses 44 der Wegscheibe 6 überfahren wird, wenn die Wegscheibe 6 gemäß Fig. 1 ganz nach rechts bewegt wird.

Da die Wegscheibe 6 und damit auch der Hals 44 relativ zur Welle 2 axial verschiebbar ist, besteht notwendigerweise zwischen der an der Außenfläche der Welle 2 geführten Innenfläche der Wegscheibe 6 und des Halses 44, beispielsweise der axial verlaufenden Innenfläche 54 des Halses 44 und der Außenfläche der Welle 2, ein Spiel bis zu etwa 50 µm. Zu diesem grundsätzlich vorhandenen Spiel kommt eine leichte Ovalverformung, insbesondere des rechtsseitigen Endes des Halses 44, wenn auf die Festscheibe 6 infolge der Anpresskraft des nicht dargestellten Umschlingungsmittels Kippmomente wirken. Der notwendigerweise vorhandene Ringspalt zwischen dem Hals 44 und der Welle 4, der beim Verkippen bzw. der Ovalverformung teilweise vergrößert wird, sorgt dafür, dass die Spaltverbindung zwischen dem Durchlass 28 und dem Hals 44 bzw. der Festscheibe 6 ausreicht, damit der Durchlass 28 über dessen Mündung 54 und die sich ausbildende Spalte über Spaltquerschnitte mit dem Druckraum 22 verbunden und eine Druckbeaufschlagung der Druckkammer 22 möglich ist. Im Praxisbetrieb wurden zufriedenstellende Versuchsergebnisse erzielt, wobei der Druckaufbau in der Druckkammer 22 allerdings gegenüber dem Druckaufbau in dem axialen Durchlass 46 verzögert ist, beispielsweise in der Größenordnung von einigen 100 ms.

Der Ausschnitt E zeigt ein vorteilhaftes Detail der Ausführungsform gemäß Fig. 1, mit der die zwischen der Druckkammer 22 und dem Durchlass 28 vorhandenen Spaltquerschnitte vergrößert sind, um die Verzögerung des Druckaufbaus zu verringern.

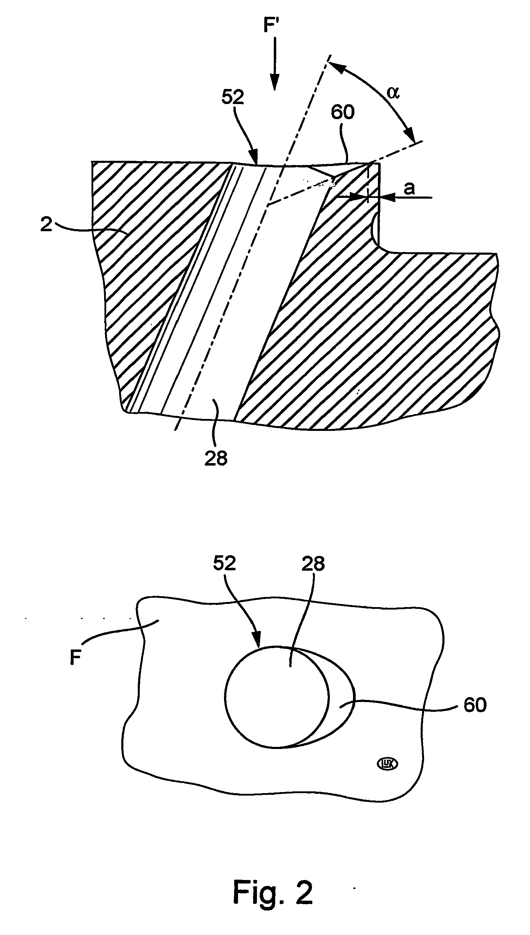

Der Durchlass 28, der normalerweise als einfache radiale oder schräg zur radialen Richtung gerichtete Bohrung der Welle 2 ausgebildet ist, weist an seiner der Wegscheibe 6 zugewandten Seite eine Ansenkung 60 auf, die den Spaltdurchtrittsquerschnitt für das Hydraulikmittel, wie aus dem Ausschnitt E unmittelbar ersichtlich, vergrößert. Dies gilt insbesondere in Verbindung mit einer leichten Fase 62 bzw. Schrägung, mit der das rechtsseitige Ende der Festscheibe 6 bzw. von deren Hals 44 zur Vermeidung von Kantenpressung beim Verkippen der Wegscheibe 6 ausgebildet ist. Die Neigung einer solchen Fase 62 relativ zur axialen Richtung liegt beispielsweise in der Größenordnung von etwa 2°. Wie im Ausschnitt E weiter ersichtlich, endet die Ansenkung 60 rechtsseitig axial etwa in einem Bereich, der der radialen Stimfläche des Halses 44 in dessen voll nach rechts verschobenen Position entspricht. Der Winkel α, den die Fase 60 mit der Achse des Durchlasses 28 bildet, beträgt vorteilhafter Weise etwa 45°. Die Fase 60 endet in einem Abstand a von einer Stufe der Welle 2, an der der Stützring 8 (Fig. 1) anliegt, wobei der Stützring 8 einen Anschlag für die Festscheibe 6 bildet. Das Maß a beträgt beispielsweise etwa 0,4 mm. Der Ausschnitt F der Fig. 2 zeigt eine Aufsicht auf die Mündung 52 des Durchlasses 28 in Richtung des Pfeils F'.

Fig. 3 zeigt ein Detail der Ausbildung des Endbereiches des Halses 44:

Am Ende des Halses 44 der Wegscheibe 6 ist eine Fase 64 ausgebildet, die in einem ersten Bereich 66 eine Steigung (Winkel X) von etwa 2° hat und dann um einen größeren Winkel Z zur Achse A-A (Fig. 1) geneigt ist, der bis zu 10° beträgt.

Das Maß A, d. h. der Abstand zwischen dem Beginn der Fase 64 und dem Ende des Halses 44 beträgt etwa 2,5 mm. Das Maß B, d. h. der Abstand des Beginnes des zweiten Bereiches von dem Ende des Halses 44 beträgt etwa 1,5 mm.

Fig. 4 zeigt eine gegenüber der Fig. 3 abgeänderte Ausführungsform, bei der die Fase 64 gerundet ausgebildet ist, beispielsweise in Form eines Kreisbogens mit Radius R, der im Abstand A von etwa 3 mm vom axialen Ende des Halses 44 beginnt und tangential oder mit einem Knick an die achsparallele zylindrische Innenfläche des Halses 44 ansetzt.

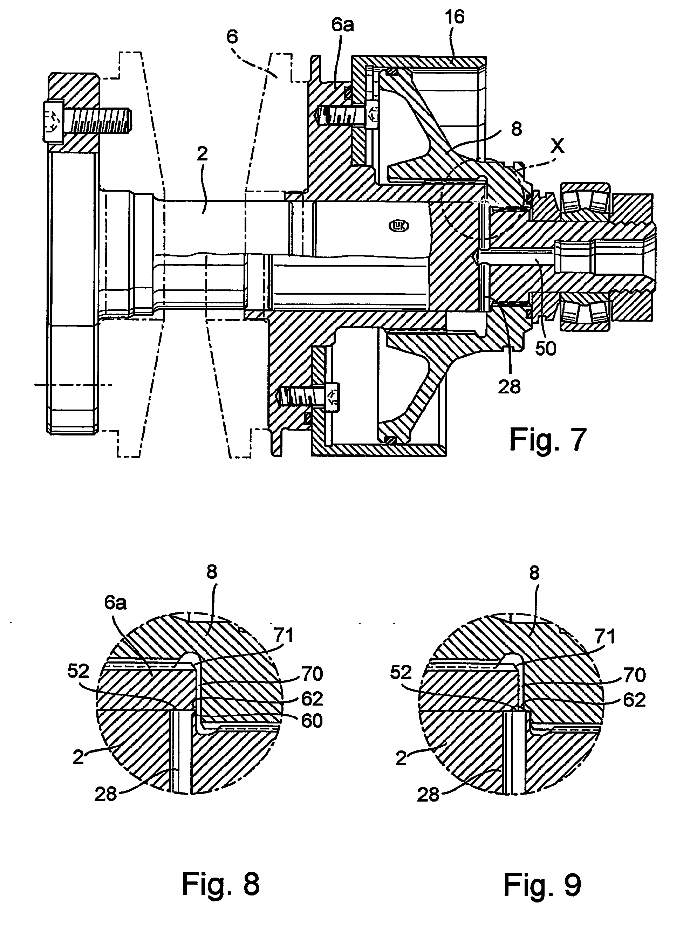

Fig. 7 zeigt eine weitere konstruktive Ausführungsform eines Kegelscheibenpaares und des Stützringes 8 bzw. der zylindrischen Ringwand 16. Bei dieser Ausgestaltung sind die Kegelscheiben jeweils geteilt. So bestehen sie jeweils aus der Scheibe 6 selbst und aus einem Scheibenträger 6a, die vorzugsweise miteinander verschraubt sind. Diese konstruktive Ausführung hat den Vorteil, dass bei Verschleißanzeige der Scheiben 6 diese auf einfache Weise vom Scheibenträger 6a gelöst und durch neue Scheiben 6 ausgetauscht werden zu können

Fig. 8 zeigt die Ansicht X mit einer Lösung die Mündung 52 des Durchlasses 28. Diese Mündung 52 ist in diesem Falle, ebenso wie in Fig. 1 ersichtlich, mit einer Nase 60 versehen. Da der Wegscheibenträger 6a im Kontaktbereich zum Durchlass 28 mit einer Fase 70 versehen ist, kann das Druckmittel vom Durchlass 28 über den geringen Zwischenraum, der von den beiden Fasen 60 und 62 sowie der Axialnut 70 gebildet wird, in die Druckkammer 22 einfließen.

Eine andere Möglichkeit der Weiterleitung des Druckmittels ist aus der konstruktive Ausbildung gemäß Ansicht X aus Fig. 9 ersichtlich. Hierbei ist der Stützring 8 über dem Durchlass 28 abgesetzt. Dadurch ist gewährleistet, dass das Druckmittel vom Durchlass 28 aus direkt über die Axialnut 70 in die Druckkammer 22 gelangen kann. Zur Vergrößerung des Eintrittsquerschnittes bzw. zur Verbesserung des Fließverhaltens des Druckmittels ist der Wegscheibenträger 6a im Kontaktbereich zur Welle 2 mit einer Fase 62 versehen.

Mit den beschriebenen Merkmalen wird erreicht, dass in allen Betriebszuständen ausreichende Spaltquerschnitte zur Verfügung stehen, über die die innere Druckkammer 22 mit Druckmittel versorgt wird.

Die beschriebenen Merkmale können einzeln und in unterschiedlichster Kombination miteinander eingesetzt werden.

Die Erfindung ist nicht auf Kegelscheibenpaare mit einer Anordnung von Druckkammern gemäß der Fig. 1 oder Fig. 7 beschränkt. Sie eignet sich insbesondere für alle Arten von Druckkammern, bei denen eine unmittelbar an die Welle angrenzende Druckkammer an der Rückseite der Wegscheibe durch die Welle hindurch mit Druckmittel versorgt wird, beispielsweise Anordnungen mit nur einer Druckkammer, oder auch Anordnungen mit an sich bekannter Druckkammeranordnung in Tandembauweise.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbstständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Kegeischeibenumschiingungsgetriebe mit einem antriebseitigen (4,6) und einem abtriebseitige (10,12) Kegelscheibenpaar, wobei jeweils ein Kegelpaar,
- auf einer Welle (2,8) angeordnet ist,
- eine ein- oder mehrteilig mit der Welle ausgebildeten Festscheibe (4),
- eine mit der Welle drehfest und axial verschiebbar verbundene WegScheibe (6),
- einen im Abstand von einer Rückseite der Wegscheibe (6) an der Welle (2) axial unverschiebbar befestigten Stützring (8),
- wenigstens eine axial zwischen dem Stützring (8) und der Rückseite der Wegscheibe (6) ausgebildete Druckkammer (22), die über einen oder mehrere in eine Umfangsfläche der Welle (2) mundenden, in der Welle (2) ausgebildeten Durchlass (28) mit Hydraulikdruckmittel versorgt wird, dessen Druck zur Verschiebung der Wegscheibe (6) veränderbar ist, und
- ein Endbereich (44) einer an der Welle (2) geführten Innenfläche der Wegscheibe (6) bei deren maximaler Entfernung von der Festscheibe (4) die Mündung (54) des Durchlasses (28) überfährt **dadurch gekennzeichnet, dass** die Hydraulikmittelverbindung zwischen dem Durchlass (28) und der Druckkammer (22) im Wesentlichen über Leckspalte zwischen der Innenfläche der Wegscheibe (6) und der Außenfläche der Welle (2) erfolgt.

2. Kegelscheibenumschlingungsgetriebe nach Anspruch 1, **dadurch gekennzeichnet, dass** die Wegscheibe zu dem Stützring hin mit einem in dem Endbereich endenden Hals ausgebildet ist.

3. Kegelscheibenumschlingungsgetriebe nach Anspruch 1 oder 2, **dadurch gekennzeichnet, dass** der Endbereich sich infolge eines von der Kegelscheibe her wirkenden Kippmoments radial verlagert und damit an einem Teilumfang ein radialer Spalt zwischen der Innenfläche und der Welle entsteht.

4. Kegelscheibenumschlingungsgetriebe nach Anspruch 1 oder 2, **dadurch gekennzeichnet, dass** der Endbereich sich infolge eines von der Kegelscheibe her wirkenden Kippmoments oval verformt.

5. Kegelscheibenumschlingungsgetriebe nach Anspruch 1 oder 2, **dadurch gekennzeichnet, dass** der Endbereich sich infolge eines von der Kegelscheibe her wirkenden Kippmoments auf einem Teilumfang axial vom Stützring abhebt.

6. Kegelscheibenumschlingungsgetriebe nach einem der Ansprüche 1 bis 3, **dadurch gekennzeichnet, dass** die dem Stützring zugewandte Seite der Mündung oder die gesamte Mündung des Durchlasses angesenkt ist.

7. Kegelscheibenumschlingungsgetriebe nach einem der Ansprüche 1 bis 4, **dadurch gekennzeichnet, dass** das der Außenfläche der Welle und dem Stützring zugewandte Ende der Wegscheibe mit einer Fase versehen ist.

8. Kegelscheibenumschlingungsgetriebe nach Anspruch 5, **dadurch gekennzeichnet, dass** die Neigung der Fase zwischen 2° und 10° beträgt.

9. Kegelscheibenumschlingungsgetriebe nach Anspruch 5, **dadurch gekennzeichnet, dass** die Länge der Fase zwischen 0,5 und 5 mm beträgt.

10. Kegelscheibenumschlingungsgetriebe nach Anspruch 5 oder 6, **dadurch gekennzeichnet, dass** die Neigung der Fase axial nach außen hin zunimmt.

11. Kegelscheibenumschlingungsgetriebe nach Anspruch 5 oder 6, **dadurch gekennzeichnet, dass** die Länge der steileren Fase zwischen 20 und 80 % der Länge der gesamten Fase beträgt.

12. Kegelscheibenumschlingungsgetriebe nach Anspruch 5, **dadurch gekennzeichnet, dass** die Fase als eine Rundung ausgeführt ist, die tangential oder mit einem Knick in eine zylindrische Innenfläche der Wegscheibe übergeht.

13. Kegelscheibenumschlingungsgetriebe nach Anspruch 5, **dadurch gekennzeichnet, dass** der Rundungshalbmesser zwischen 5 und 50 mm beträgt.

14. Kegelscheibenumschlingungsgetriebe nach Anspruch 5, **dadurch gekennzeichnet, dass** die axiale Erstreckung der Rundung zwischen 1 und 8 mm beträgt.

15. Kegelscheibenumschlingungsgetriebe nach Anspruch 1, **dadurch gekennzeichnet, dass** die Welle vorzugsweise in unmittelbarer Nähe ihrer Verjüngung zum Sitz des Stützringes mindestens eine radiale Durchgangsbohrung aufweist.

16. Kegelscheibenumschlingungsgetriebe nach Anspruch 9, **dadurch gekennzeichnet, dass** die Durchgangsbohrung jeweils endseitig eine Ansenkung erhält.

17. Kegelscheibenumschlingungsgetriebe nach Anspruch 9 und 10, **dadurch gekennzeichnet, dass**, die Ansenkung in Form einer Fase ausgeführt ist.

18. Kegelscheibenumschlingungsgetriebe nach den Ansprüchen 9 bis 11, **dadurch gekennzeichnet, dass** die Ansenkung die Form einer Rundung aufweist.

19. Kegelscheibenumschlingungsgetriebe nach Anspruch 1 und 9, **dadurch gekennzeichnet, dass** der Stützring an der Seite, wo der Wegscheibenträger an diesen anschlägt, abgesetzt ist und mit einer umlaufenden Nut versehen ist.

20. Kegelscheibenumschlingungsgetriebe nach einem der Ansprüche 9 bis 13, **dadurch gekennzeichnet, dass** am Halsende der Kegelscheibe eine umlaufende Ausnehmung vorhanden ist.

21. Kegelscheibenumschlingungsgetriebe nach Anspruch 14, **dadurch gekennzeichnet, dass** die umlaufende Ausnehmung die Form einer Fase oder Wölbung aufweist.

## Claims

1. A belt-driven conical-pulley transmission having a pair of conical disks each on the input (4, 6) and power take-off sides (10, 12), where each pair of disks
- is positioned on a shaft (2, 8),
- a fixed disk (4) which is formed with the shaft in a single piece or multiple pieces,
- a movable disk (6) that is connected with the shaft in a rotationally fixed and axially movable connection,
- a support ring (8) that is attached to the shaft (2) so that it is axially immovable, spaced at an interval from a back side of the movable disk (6),
- at least one pressure chamber (22) formed axially between the support ring (8) and the back side of the movable disk (6), which is supplied through one or more ducts (28) formed in the shaft (2) and leading to a circumferential surface of the shaft (2), with a hydraulic means of exerting pressure whose pressure is changeable to reposition the movable disk (6), and
- an end area (44) of an inner surface of the movable disk (6) guided on the shaft (2), which covers the mouth (54) of the duct (28) when the movable disk is at its maximum distance from the fixed disk (4), **characterized in that** the hydraulic fluid connection between the duct (28) and the pressure chamber (22) occurs essentially through leakage gaps between the inner surface of the movable disk (6) and the outer surface of the shaft (2).

2. A belt-driven conical pulley transmission according to Claim 1, **characterized in that** on the side toward the support ring the movable disk is formed with a neck ending in the end area.

3. A belt-driven conical-pulley transmission according to Claim 1 or 2, **characterized in that** the end area shifts radially as a result of a tilting moment acting from the conical disk, and thus a radial gap occurs between the inner surface and the shaft around part of the circumference.

4. A belt-driven conical-pulley transmission according to Claim 1 or 2, **characterized in that** the end area is distorted elliptically as a result of a tilting moment acting from the conical disk.

5. A belt-driven conical-pulley transmission according to Claim 1 or 2, **characterized in that** the end area stands off axially from the support ring around part of the circumference as a result of a tilting moment acting from the conical disk.

6. A belt-driven conical-pulley transmission according to one of Claims 1 to 3, **characterized in that** the side of the mouth of the duct facing the support ring, or the entire mouth, is countersunk.

7. A belt-driven conical-pulley transmission according to one of Claims 1 to 4, **characterized in that** the end of the movable disk facing the outer surface of the shaft and the support ring is beveled.

8. A belt-driven conical pulley transmission according to Claim 5, **characterized in that** the slope of the bevel is between 2° and 10°.

9. A belt-driven conical pulley transmission according to Claim 5, **characterized in that** the length of the bevel is between 0.5 and 5 mm.

10. A belt-driven conical-pulley transmission according to Claim 5 or 6, **characterized in that** the slope of the bevel increases axially toward the outside.

11. A belt-driven conical-pulley transmission according to Claim 5 or 6, **characterized in that** the length of the steeper bevel is between 20% and 80 % of the length of the entire bevel.

12. A belt-driven conical pulley transmission according to Claim 5, **characterized in that** the bevel is executed as a rounding that passes over tangentially or as a sharp bend into a cylindrical inner surface of the movable disk.

13. A belt-driven conical pulley transmission according to Claim 5, **characterized in that** the radius of the rounding is between 5 and 50 mm.

14. A belt-driven conical pulley transmission according to Claim 5, **characterized in that** the axial extent of the rounding is between 1 and 8 mm.

15. A belt-driven conical pulley transmission according to Claim 1, **characterized in that** the shaft preferably has at least one radial through bore in the immediate vicinity of its taper for seating the support ring.

16. A belt-driven conical pulley transmission according to Claim 9, **characterized in that** the through bore is countersunk at each end.

17. A belt-driven conical-pulley transmission according to Claim 9 or 10, **characterized in that** the countersinking is executed in the form of a bevel.

18. A belt-driven conical-pulley transmission according to one of Claims 9 to 11, **characterized in that** the countersinking is in the form of a rounding.

19. A belt-driven conical-pulley transmission according to Claim 1 and 9, **characterized in that** the support ring is provided with a circumferential groove at the point where the movable disk support strikes it.

20. A belt-driven conical-pulley transmission according to one of Claims 9 to 13, **characterized in that** there is a circumferential recess on the neck end of the conical disk.

21. A belt-driven conical pulley transmission according to Claim 14, **characterized in that** the circumferential recess has the form of a bevel or crowning.

## Revendications

1. Variateur à enroulement à disques coniques avec une paire de disques coniques menants (4, 6) et une paire de disques coniques menés (10, 12), dont les paires de disques coniques
- sont disposées sur un arbre (2, 8) et avec
- un disque fixe (4) constitué en une ou plusieurs parties avec l'arbre
- un disque mobile (6) bloqué en rotation sur l'arbre et mobile en direction axiale
- une bague d'appui (8) fixée sur l'arbre (2) et immobile en direction axiale, écartée d'une face arrière du disque mobile (6)
- au moins une chambre de compression (22) constituée, en direction axiale, entre la bague d'appui (8) et la face arrière du disque mobile (6), alimentée par un fluide de pression hydraulique via un ou plusieurs passages (28) situés dans l'arbre (2) et débouchant sur une surface périphérique de l'arbre (2) et dont la pression nécessaire pour déplacer le disque mobile (6) peut être modifiée et
- une extrémité (44) d'une surface intérieure du disque mobile (6) guidée sur l'arbre (2) qui dépasse l'orifice (54) du passage (28) lors de son éloignement maximal du disque fixe (4), **caractérisé par le fait que** la liaison de fluide hydraulique entre le passage (28) et la chambre de compression (22) se fait essentiellement via des interstices de fuite entre la surface intérieure du disque mobile (6) et la surface extérieure de l'arbre (2).

2. Variateur à enroulement à disques coniques selon la revendication 1, **caractérisé par le fait que** le disque mobile comporte, en direction de la bague d'appui, un col se terminant dans la zone d'extrémité.

3. Variateur à enroulement à disques coniques selon la revendication 1 ou 2, **caractérisé par le fait que** la zone d'extrémité se décale en direction radiale en raison d'un couple de renversement agissant à partir du disque conique et faisant ainsi apparaître sur une partie de la périphérie un jeu radial entre la surface intérieure et l'arbre.

4. Variateur à enroulement à disques coniques selon la revendication 1 ou 2, **caractérisé par le fait que** la zone d'extrémité se déforme de façon ovale en raison d'un couple de renversement agissant à partir du disque conique.

5. Variateur à enroulement à disques coniques selon la revendication 1 ou 2, **caractérisé par le fait que** la zone d'extrémité se dégage en direction axiale de la bague d'appui sur une partie de la périphérie en raison d'un couple de renversement agissant à partir du disque conique.

6. Variateur à enroulement à disques coniques selon l'une quelconque des revendications 1 à 3, **caractérisé par le fait que** le côté de l'orifice orienté vers la bague d'appui ou l'orifice entier du passage est fraisé.

7. Variateur à enroulement à disques coniques selon l'une quelconque des revendications 1 à 4, **caractérisé par le fait que** l'extrémité du disque mobile orientée vers la surface extérieure de l'arbre et la bague d'appui comporte un chanfrein.

8. Variateur à enroulement à disques coniques selon la revendication 5, **caractérisé par le fait que** l'inclinaison du chanfrein varie entre 2° et 10°.

9. Variateur à enroulement à disques coniques selon la revendication 5, **caractérisé par le fait que** la longueur du chanfrein varie entre 0,5 et 5 mm.

10. Variateur à enroulement à disques coniques selon la revendication 5 ou 6, **caractérisé par le fait que** l'inclinaison du chanfrein croît axialement vers l'extérieur.

11. Variateur à enroulement à disques coniques selon la revendication 5 ou 6, **caractérisé par le fait que** la longueur de la partie plus inclinée du chanfrein s'étend sur 20 à 80 % de la longueur totale du chanfrein.

12. Variateur à enroulement à disques coniques selon la revendication 5, **caractérisé par le fait que** le chanfrein est réalisé sous forme d'arrondi, lequel est raccordé de façon tangentielle ou avec un coude à une surface intérieure cylindrique du disque mobile.

13. Variateur à enroulement à disques coniques selon la revendication 5, **caractérisé par le fait que** le rayon de l'arrondi varie entre 5 et 50 mm.

14. Variateur à enroulement à disques coniques selon la revendication 5, **caractérisé par le fait que** l'étendue axiale de l'arrondi varie entre 1 et 8 mm.

15. Variateur à enroulement à disques coniques selon la revendication 1, **caractérisé par le fait que** l'arbre présente, de préférence à proximité de son rétrécissement vers le siège de la bague d'appui, au moins un trou de passage radial.

16. Variateur à enroulement à disques coniques selon la revendication 9, **caractérisé par le fait que** le trou de passage comporte une fraisure à ses deux extrémités.

17. Variateur à enroulement à disques conique selon les revendications 9 et 10, **caractérisé par le fait que** la fraisure se présente sous la forme d'un chanfrein.

18. Variateur à enroulement à disques conique selon les revendications 9 à 11, **caractérisé par le fait que** la fraisure se présente sous la forme d'un arrondi.

19. Variateur à enroulement à disques conique selon les revendications 1 et 9, **caractérisé par le fait que** la bague d'appui comporte un épaulement et est pourvue d'une gorge circulaire à l'endroit où le porte-disque mobile prend appui.

20. Variateur à enroulement à disques conique selon l'une quelconque des revendications 9 à 13, **caractérisé par le fait qu'**un évidement circulaire est prévu à l'extrémité du col du disque conique.

21. Variateur à enroulement à disques conique selon la revendication 14, **caractérisé par le fait que** l'évidement circulaire se présente sous la forme d'un chanfrein ou d'un congé concave.
